# DEMANDE DE BREVET EUROPEEN

(11) **EP 0 844 410 A1**
(43) Date de publication de la demande: **27.05.1998**
(21) Numéro de dépôt: 97402825.0
(22) Date de dépôt: 25.11.1997
(51) Int. Cl.: F16C 39/06

(54) **Palier magnétique actif longitudinalement et transversalement**

(30) Priorité: 25.11.1996 FR 9614368
(71) Demandeur: AEROSPATIALE Société Nationale Industrielle, 75781 Paris Cédex 16 (FR)
(72) Inventeur: Lambert, Charles, 06150 Cannes La Bocca (FR)
(74) Mandataire: Rinuy, Santarelli

(57) **Abrégé**

Pour centrer de manière active une partie mobile ferromagnétique (1) par rapport à une partie fixe (2), un palier magnétique comporte des pièces polaires principales (21, 22) et une pièce ferromagnétique médiane (23) perpendiculaires à un axe de référence (Z-Z). Des entrefers principaux (E1, E2) sont d'épaisseur variable parallèlement à l'axe de référence (Z-Z) et un entrefer médian (E3) est d'épaisseur variable parallèlement à un axe transversal, entre les parties fixe et mobile. Deux aimants à sens opposés d'aimantation et des bobines indépendantes sont enserrés entre les pièces polaires principales (21, 22) et la pièce ferromagnétique médiane (23). Les bobines génèrent dans la pièce ferromagnétique médiane (23) un flux magnétique commandable traversant l'entrefer médian (E3), pour assurer un centrage transversal, et un flux magnétique commandable traversant les entrefers principaux (E1, E2), pour assurer un centrage parallèlement audit axe de référence.

## Description

La présente invention concerne d'une manière générale un palier magnétique comportant un circuit magnétique formé d'une partie fixe et d'une partie mobile sans contact.

De manière connue, par exemple par le document US-A-4.918.345, un palier magnétique est utilisé pour le centrage magnétiquement actif, selon un ou deux axes de centrage, d'un corps mobile par rapport à un autre corps. Les deux corps comportent des portions ferromagnétiques, sans contact, formant conjointement le palier, et le corps mobile est dit en suspension. Un centrage magnétiquement actif implique l'utilisation d'un bobinage dans lequel circule un courant réglable propre à générer un flux magnétique réglable dans des entrefers variant parallèlement à l'axe de centrage.

Les paliers magnétiques peuvent être utilisés aussi bien dans le cas de mouvements rotatifs que dans le cas de mouvements linéaires.

Il est ainsi connu de centrer activement un corps, par un palier magnétique, selon un axe de référence, parfois appelé axe longitudinal, ou selon un axe transversal, ou encore selon deux axes transversaux. Généralement, un tel palier comporte en outre des aimants permanents qui peuvent contribuer au centrage actif, mais aussi, dans certaines configurations, assurer un centrage passif selon un ou plusieurs autres axes.

Par exemple, une catégorie de paliers magnétiques pour corps tournants assure un centrage actif selon deux axes transversaux, ou radiaux, et un centrage passif selon l'axe de rotation, ou axe longitudinal ; on parle parfois de palier 2-axes radialement actif («palier transversal, ou radial»). Une autre catégorie de paliers magnétiques pour corps tournants assure un centrage actif selon l'axe longitudinal et un centrage passif selon les axes transversaux ; on parle parfois de palier 1-axe, axialement actif («palier longitudinal ou axial»).

Dans certains cas de mouvement de rotation, un centrage actif selon l'axe longitudinal et au moins un axe transversal est nécessaire pour assurer un positionnement transversal de la partie mobile par rapport à la partie fixe, tout en ayant un positionnement longitudinal précis. On utilise alors un premier palier magnétique actif selon l'axe longitudinal («palier longitudinal ou axial») et un second palier magnétique actif selon un ou deux axes transversaux perpendiculaires au précédent («palier transversal, ou radial»).

Ces deux paliers doivent être découplés magnétiquement pour agir indépendamment l'un de l'autre sur la partie mobile. Pour cela, ils sont séparés l'un de l'autre et sont par exemple juxtaposés suivant l'axe longitudinal du palier.

Un tel agencement de paliers, s'il permet un centrage actif selon l'axe longitudinal de référence et au moins un axe transversal, et donc un asservissement de position suivant ces axes, présente néanmoins l'inconvénient d'occuper un volume important en raison de la juxtaposition des deux paliers.

En outre, la fabrication de cet agencement est complexe et délicate. Par exemple, la partie statorique du palier actif suivant l'axe longitudinal de référence doit être insérée et positionnée entre deux pièces polaires frettées sur la partie rotorique, tandis que les éléments du palier actif transversalement, juxtaposé au précédent, doivent également être montés et positionnés les uns par rapport aux autres.

Ces inconvénients sont encore plus nets lorsque, comme cela est courant, le rotor est suspendu par deux paliers radiaux décalés axialement et que, pour des raisons d'efficacité et de minimisation d'encombrement, le palier axial est disposé entre les paliers radiaux.

La même analyse peut être faite à propos du centrage de corps en translation, l'axe de référence étant pris perpendiculairement à la direction de translation et à la direction transversale de centrage.

La présente invention vise à remédier aux inconvénients de la technique antérieure, en fournissant un palier magnétique pour un corps tournant ou un corps en translation, qui est actif selon un axe de référence et au moins un axe transversal, d'un volume plus réduit, et plus simple à fabriquer que selon la technique antérieure, avec toutefois un niveau équivalent de performances.

A cette fin, l'invention propose un palier magnétique pour le centrage d'un corps mobile sans contact par rapport à un corps fixe selon un axe de référence, ayant au moins un axe transversal perpendiculaire à l'axe de référence, et comportant
- deux circuits magnétiques disposés de part et d'autre de l'axe de référence, le long de l'axe transversal, et formés chacun de première et seconde parties ferromagnétiques destinées à être portées respectivement par lesdits corps et séparées par deux entrefers principaux décalés parallèlement à l'axe de référence, la première partie ferromagnétique comportant deux pièces polaires principales perpendiculaires à l'axe de référence,
- des moyens à aimantation permanente parallèle à l'axe de référence, disposés entre les pièces polaires principales de chaque circuit magnétique et générant des flux magnétiques au travers des entrefers principaux,
- des moyens à bobinage adaptés à générer dans au moins l'un des circuits magnétiques un flux magnétique commandable dans les entrefers principaux,
ce palier magnétique étant caractérisé en ce que, pour l'un au moins des circuits magnétiques,
- les entrefers principaux sont d'épaisseur variable parallèlement à l'axe de référence,
- une pièce ferromagnétique médiane perpendiculaire à l'axe de référence, solidaire de la première partie ferromagnétique, est disposée entre les pièces polaires principales de cette première partie ferromagnétique et est séparée de la seconde partie ferromagnétique par un entrefer médian d'épaisseur variable parallèlement à l'axe transversal,
- les moyens à aimantation permanente comportent deux aimants à sens opposés d'aimantation enserrés entre les pièces polaires principales et la pièce ferromagnétique médiane, et
- les moyens à bobinage comportent des bobines indépendantes disposées de part et d'autre de la pièce ferromagnétique médiane parallèlement à l'axe de référence, grâce à quoi, selon le sens des courants qui traversent ces bobines, celles-ci sont adaptées à générer dans la pièce ferromagnétique médiane un flux magnétique commandable traversant l'entrefer médian, de sorte que les bobines assurent un centrage transversal, et un flux magnétique commandable traversant les entrefers principaux, grâce à quoi les bobines assurent un centrage parallèlement audit axe de référence.

On appréciera que le palier selon l'invention est actif selon l'axe de référence et au moins un axe transversal. En outre, le volume du palier magnétique selon l'invention est plus réduit que dans le cas où l'on utilise un palier longitudinal et un palier transversal juxtaposés. D'autre part, la fabrication du palier magnétique selon l'invention est plus simple et par conséquent moins onéreuse que selon la technique antérieure.

L'invention peut sembler présenter a posteriori des similitudes avec le document FR-A-2.730.021 (AEROSPATIALE) qui cherche à assurer une fonction de basculement (sur un débattement de plusieurs degrés, typiquement de trois à cinq degrés) et une éventuelle fonction de centrage selon au moins un axe de centrage perpendiculaire à un axe de référence. Il comporte en effet des entrefers principaux entre des pièces polaires principales d'une première partie ferromagnétique et une seconde partie ferromagnétique et un entrefer médian entre une pièce ferromagnétique médiane de la première partie ferromagnétique et la seconde partie ferromagnétique.

Toutefois, les entrefers principaux et l'entrefer médian sont, contrairement à l'invention, variables parallèlement à un même axe, à savoir un axe transversal à un axe de référence.

D'autre part, ce document se préoccupe de contrôler un basculement, en combinaison avec un éventuel centrage, ce qui est tout à fait différent du problème de l'invention qui porte sur deux axes de centrage sans basculement. Ce document n'avait a priori aucun intérêt pour l'homme du métier qui cherchait à résoudre le problème de l'invention.

Selon une caractéristique préférée de l'invention, les premières parties ferromagnétiques sont destinées à être portées par le corps fixe. En effet, les éléments des premières parties ferromagnétiques sont relativement lourds et sont de préférence fixes.

Selon des caractéristiques préférées, la seconde partie ferromagnétique est disposée entre les premières parties ferromagnétiques, ou à l'inverse la seconde partie ferromagnétique est disposée autour des premières parties ferromagnétiques. La structure du palier selon l'invention est ainsi adaptable à un grand nombre de configurations.

Selon une caractéristique préférée, l'axe de référence est un axe de rotation du corps mobile par rapport au corps fixe, la seconde partie ferromagnétique est une couronne magnétique, et la pièce ferromagnétique médiane est globalement annulaire dans la région de l'entrefer médian. Le palier magnétique permet alors le centrage d'un corps rotatif par rapport à un corps fixe.

Dans ce cas, selon une autre caractéristique préférée, deux autres circuits magnétiques de même structure sont disposés de part et d'autre de l'axe de rotation le long d'un second axe transversal de centrage perpendiculaire à l'axe de rotation, comportant deux autres premières parties ferromagnétiques coopérant avec la seconde partie ferromagnétique au travers de deux autres entrefers principaux d'épaisseur variable parallèlement à l'axe de rotation, des bobines étant adaptées à générer un flux magnétique commandable dans ces deux autres circuits magnétiques, d'autres aimants permanents à sens opposés d'aimantation étant disposés dans ces deux autres premières parties ferromagnétiques de part et d'autre de la pièce ferromagnétique médiane, ladite pièce ferromagnétique médiane étant séparée de la seconde partie ferromagnétique par deux autres entrefers médians, et les bobines étant adaptées à générer un flux magnétique commandable dans lesdits deux autres entrefers médians.

Le palier permet alors le centrage du corps rotatif par rapport au corps fixe selon l'axe de référence et selon deux axes transversaux.

Selon une autre caractéristique préférée, la seconde partie ferromagnétique est une barre magnétique mobile selon un axe perpendiculaire à l'axe de référence.

Selon d'autres caractéristiques, éventuellement combinées :
- les pièces polaires principales sont parallèles et centrées sur l'axe de rotation du palier magnétique, et comportent des branches qui enserrent les bobines.
- les moyens à aimantation permanente comportent deux aimants permanents en forme de couronne cylindrique centré sur l'axe de rotation.
- la seconde partie magnétique comporte une collerette sensiblement en vis à vis de la pièce ferromagnétique médiane.
- la seconde partie magnétique comporte des collerettes s'étendant sensiblement en vis à vis desdites pièces polaires principales.
- les bobines indépendantes sont disposées autour de noyaux parallèles à l'axe de référence et situés entre la pièce polaire médiane et les pièces polaires principales.

Les caractéristiques et avantages de la présente invention apparaîtront plus clairement à la lecture de plusieurs réalisations illustrées par les dessins ci-joints, dans lesquels :
- la figure 1 représente un premier mode de réalisation de palier magnétique selon l'invention, en coupe longitudinale schématique dans un plan contenant un axe de référence Z-Z,
- la figure 2 est une vue de dessus du palier magnétique selon le premier mode de réalisation de l'invention,
- les figures 3A et 3B sont des vues en coupe transversale selon les lignes III-III et II'-III' de la figure 1, du palier magnétique selon le premier mode de réalisation de l'invention,
- la figure 4 est une vue analogue à la figure 1, représentant des lignes de flux magnétique induit par les bobinages dans le palier,
- la figure 5 est une autre vue analogue à la figure 1, représentant d'autres lignes de flux magnétique induit par les bobinages dans le palier,
- la figure 6 représente un deuxième mode de réalisation de palier magnétique selon l'invention, en coupe longitudinale schématique dans un plan contenant un axe de référence Z-Z, et
- la figure 7 représente un troisième mode de réalisation de palier magnétique selon l'invention, en coupe longitudinale schématique dans un plan contenant un axe de référence Z-Z.

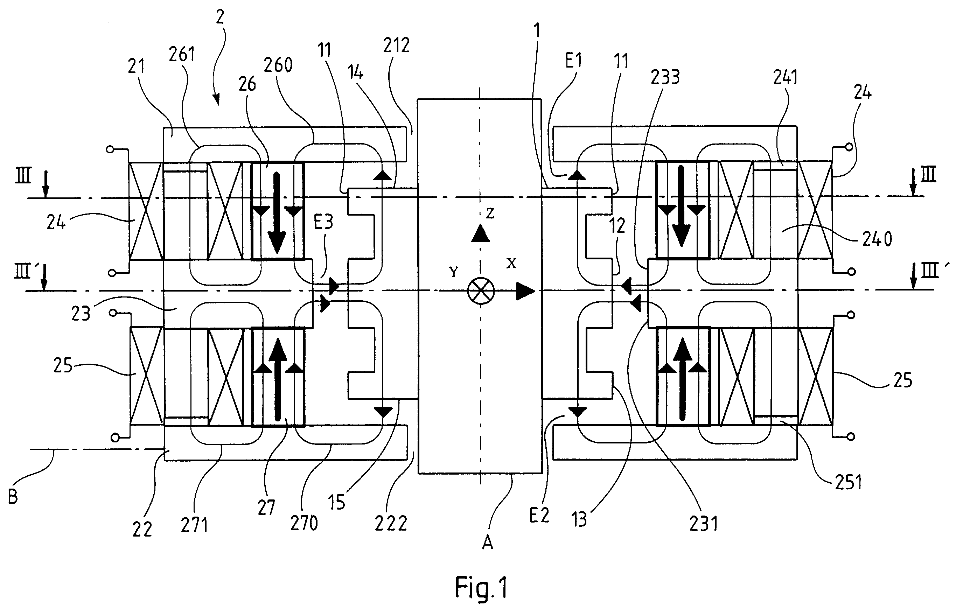

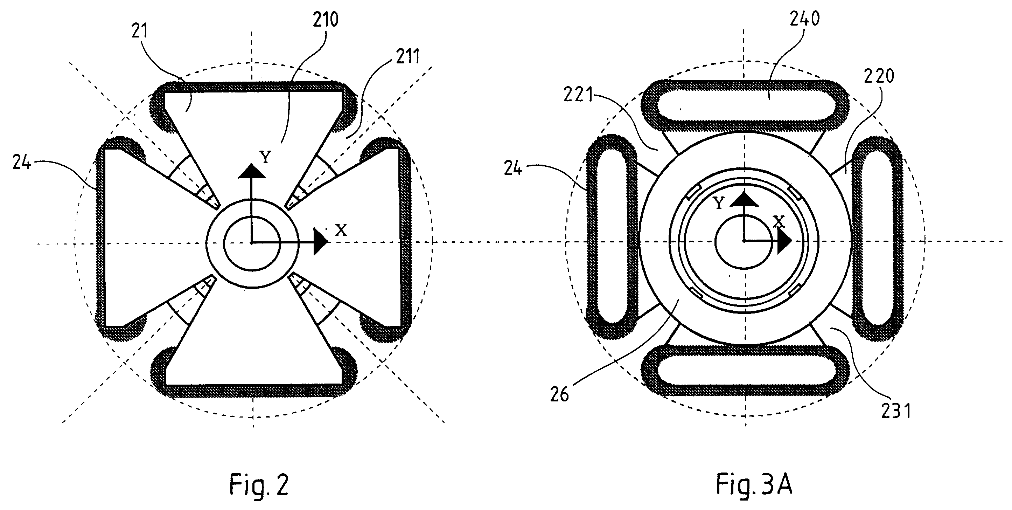

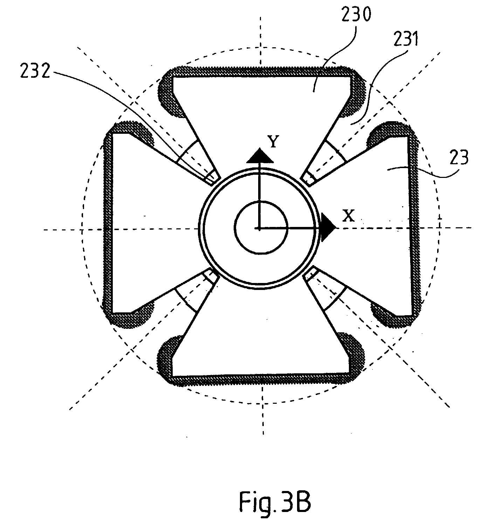

En référence aux **figures 1, 2, 3A et 3B**, l'invention s'applique à un palier magnétique comportant une partie rotorique 1 et une partie statorique 2. Ces parties 1 et 2 sont solidaires d'un rotor A et d'un stator B, respectivement.

L'axe de référence du palier magnétique est, dans ce cas, l'axe de rotation, ou axe longitudinal, Z-Z du rotor A qui est un arbre cylindrique. On suppose dans la suite que l'axe Z-Z est vertical, bien qu'il puisse adopter toute inclinaison par rapport à la verticale. Au moins dans la partie en vis à vis de la partie statorique 2, la partie rotorique 1 est d'une manière générale une couronne magnétique et plus précisément un cylindre réalisé en un matériau ferromagnétique et constitue ainsi une pièce polaire qui est avantageusement pourvue de trois collerettes 11, 12 et 13. Les collerettes 11 et 13, respectivement supérieure et inférieure, entourent la collerette médiane 12, qui est située de préférence au milieu de l'espace séparant les collerettes 11 et 13. Cette collerette 12 présente ici une hauteur selon l'axe Z-Z qui est sensiblement le triple de celle des deux autres collerettes 11 et 13. En fait, comme on le verra, l'épaisseur axiale des collerettes 11 et 13 importe peu, puisque leur but est de ménager des entrefers axiaux.

L'axe Z-Z constitue un premier axe longitudinal de centrage du palier selon l'invention.

Le palier comporte deux axes radiaux, ou transversaux, de centrage X-X et Y-Y perpendiculaires à l'axe de rotation Z-Z du rotor A.

La partie statorique 2 comporte deux plaques ferromagnétiques parallèles, identiques 21 et 22, évidées en leur centre 212, 222. Les pièces polaires 21 et 22 sont en forme de croix à quatre branches 210, respectivement 220, séparées par des entailles 211, respectivement 221. Chaque entaille 211, 221 est centrée sur un axe sensiblement à 45 degrés des axes X-X et Y-Y. Les plaques 21 et 22 sont des pièces polaires, dites pièces polaires principales, perpendiculaires à l'axe Z-Z, et centrées sur cet axe. Bien entendu, il peut y avoir trois (voire plus) axes transversaux de centrage, avec autant de paires de branches qu'il y a d'axes de centrage.

Une pièce polaire médiane 23 d'axe Z-Z est disposé, ici à mi-distance, entre les plaques 21 et 22. La pièce polaire 23 est ferromagnétique et en forme d'une croix à quatre branches 230, séparées par des entailles 231. Les branches et les entailles de la pièce polaire sont superposées à celles des pièces polaires 21 et 22. La pièce polaire 23 a une épaisseur sensiblement égale au double de celle des plaques 21 et 22 et un diamètre extérieur égal à celui des plaques 21 et 22. Le diamètre intérieur de la pièce polaire médiane est inférieur à celui des pièces polaires 21 et 22. La pièce polaire 23 est disposée radialement en regard de la collerette médiane 12 de la partie rotorique et a ici une même épaisseur axiale. La partie de la pièce polaire 23 en regard de la collerette 12 est globalement annulaire.

On notera que les entailles 231 ne séparent pas complètement les branches 230, et que ces dernières sont reliées deux à deux par des ponts 232 de faible épaisseur radiale, situés à la périphérie intérieure de la pièce polaire 23. Les ponts 232 limitent la discontinuité de flux magnétique entre deux branches successives et ainsi limitent les courants de Foucault en cas de rotation à grande vitesse de la partie rotorique.

Quatre bobines identiques 24, respectivement enroulées autour d'un noyau 240, sont disposées par paire sur l'axe X-X et sur l'axe Y-Y, entre les branches 210 de la pièce polaire principale 21 et la pièce polaire médiane 23.

De même, quatre bobines 25, respectivement enroulées autour d'un noyau 250, sont disposées par paire sur les axes de centrage, à savoir l'axe X-X et sur l'axe Y-Y, entre les branches 220 de la pièce polaire principale 22 et la pièce polaire médiane 23. Les bobines 25 sont identiques aux bobines 24.

Les bobines 24 et 25 sont indépendantes.

Des cales statiques, amagnétiques, 241 et 251 sont disposées entre chacun des noyaux et l'une des pièces polaires 21, 22 ou 23.

Deux aimants permanents, cylindriques et identiques 26 et 27 sont disposés de part et d'autre de la pièce polaire médiane 23 en étant centré sur l'axe Z-Z. L'aimant permanent 26 est inséré entre la pièce polaire 21 et la pièce polaire médiane 23, et l'aimant permanent 27 est inséré entre les pièces polaires 22 et 23. Les aimants 26 et 27 ont des aimantations parallèles à l'axe de rotation Z-Z, et de sens opposés, par exemple toutes deux dirigées vers la pièce polaire médiane 23.

Comme le montre plus particulièrement la figure 1, le diamètre intérieur de la pièce polaire 23 est inférieur à celui des aimants 26 et 27, de sorte que l'extrémité intérieure de la pièce polaire médiane 23 forme une collerette 233, en vis à vis de la collerette 12 de la partie rotorique 1.

Le palier magnétique selon l'invention comporte, pour chaque plan contenant l'axe Z-Z et un axe radial de centrage, ici X-X, trois entrefers E1, E2 et E3. Les premiers entrefers E1 et E2 s'étendent entre la partie rotorique 1 et les pièces polaires 21 et 22. Plus précisément, le premier entrefer E1 s'étend entre la face supérieure 14 de la partie rotorique 1 et une portion de la face inférieure de la pièce polaire supérieure 21.

Il est à noter que la collerette 11 augmente la surface de la face supérieure 14, et donc favorise le passage du flux magnétique par l'entrefer E1.

Le second entrefer E2 s'étend entre la face inférieure 15 de la partie rotorique 1 et une portion de la face supérieure de la pièce polaire inférieure 22. Le second entrefer est analogue au premier entrefer E1.

Les entrefers E1 et E2, dits entrefers principaux, sont d'épaisseur variable parallèlement à l'axe de rotation Z-Z.

Le troisième entrefer E3 s'étend entre la collerette 12 et la collerette 233 de la pièce polaire médiane 23. L'entrefer E3, dit entrefer médian, est d'épaisseur variable parallèlement à l'axe transversal considéré.

Il est à noter que le rotor A, qui peut s'étendre de part et d'autre de la partie rotorique selon l'axe Z-Z, est en matériau amagnétique pour éviter une propagation de flux magnétique en dehors des pièces ferromagnétiques précédemment décrites.

L'aimant permanent 26 génère un flux magnétique passant, selon une première boucle magnétique 260, dans la pièce polaire 23, l'entrefer E3, la partie rotorique 1, l'entrefer E1 et la pièce polaire 21, et selon une seconde boucle magnétique 261, dans la pièce polaire 23, les noyaux magnétiques 240, les cales statiques 241 et la pièce polaire 21.

De même, l'aimant permanent 27 génère un flux magnétique passant, selon une première boucle magnétique 270, dans la pièce polaire médiane 23, l'entrefer E3, la partie rotorique 1, l'entrefer E3 et la pièce polaire 22 et selon une seconde boucle magnétique 271 dans la pièce polaire 23, les noyaux magnétiques 250, les cales statiques 251 et la pièce polaire 22.

Les deux aimants étant identiques et d'aimantation longitudinale de sens opposés, les flux générés créent un équilibre de position de la partie rotorique 1 par rapport à la partie statorique 2. Cet équilibre est instable.

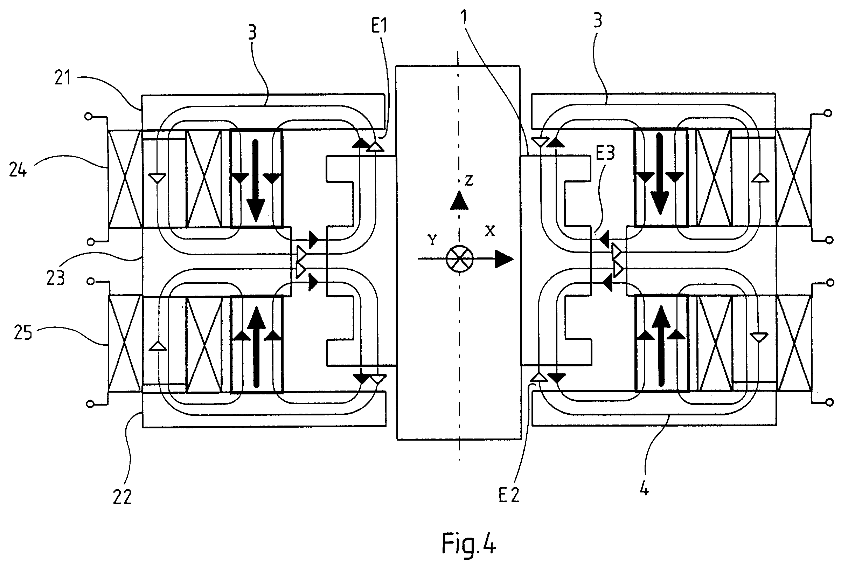

En référence à la **figure 4,** il est supposé que l'on souhaite déplacer le rotor vers la gauche, dans le plan de la figure 4. Les deux bobines 24 alignées selon l'axe X-X sont parcourues par des courants électriques. Chacun de ces courants génère un flux d'induction 3 passant par la pièce polaire médiane 23, l'entrefer E2, la partie rotorique 1, l'entrefer E1, et la pièce polaire 21.

De même, les deux bobines 25 alignées selon l'axe X-X sont parcourues par des courants électriques. Chacun de ces courants génère un flux d'induction 4 passant par la pièce polaire médiane 23, l'entrefer E2, la partie rotorique 1, l'entrefer E1, et la pièce polaire 22.

Dans l'entrefer médian E3, les flux magnétiques 3 et 4 des bobines 24 et 25 situées à gauche à la figure 4 s'additionnent entre eux, et également avec les flux magnétiques des aimants 26 et 27. Les flux magnétiques 3 et 4 des bobines 24 et 25 situées à droite à la figure 4 s'additionnent entre eux, mais s'opposent aux flux magnétiques des aimants 26 et 27.

Dans les entrefers E1 et E2, les flux induits par les courants dans les bobines 24 et 25 ont des influences contraires qui se neutralisent, à condition que les flux générés soient de même grandeur, c'est-à-dire en pratique, en supposant que les entrefers E1 et E2 sont égaux à l'instant considéré, que les courants circulant dans les bobines sont de même valeur absolue.

Ainsi le flux induit par les bobines 24 et 25 provoque une force propre à déplacer le rotor suivant l'axe transversal X-X, plus précisément vers la gauche dans l'exemple décrit à la figure 4. Il est ainsi possible de centrer de manière active le palier magnétique selon l'axe X-X, sans pour cela modifier la position du rotor selon l'axe longitudinal Z-Z.

Un déplacement du rotor vers la droite à la figure 4 est réalisé en inversant les sens des courants traversant les bobines 24 et 25.

Un déplacement du rotor selon l'axe Y-Y est réalisé de manière analogue, en faisant parcourir des courants dans les bobines 24 et 25 situées sur l'axe Y-Y.

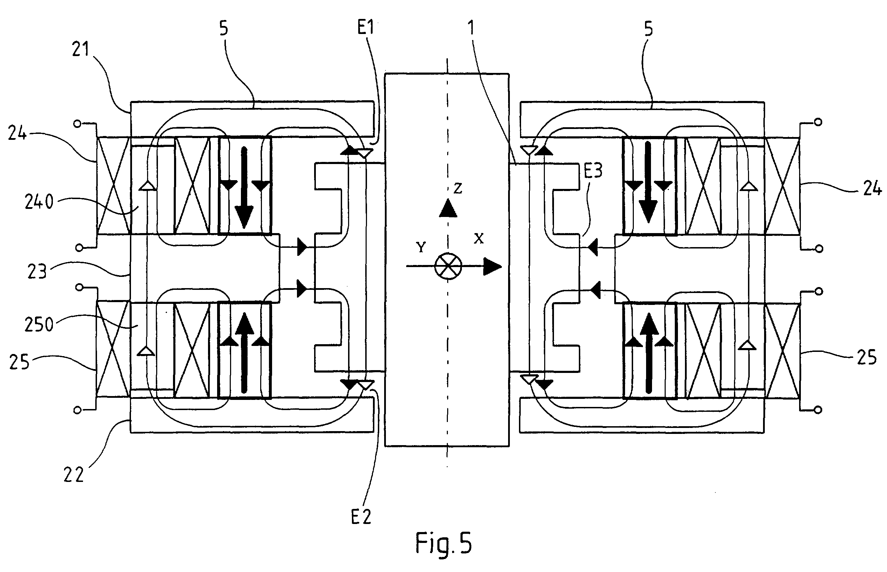

En référence à la **figure 5,** on souhaite déplacer le rotor selon l'axe Z-Z, par exemple vers le bas.

Les bobines 24 et 25 centrées sur l'axe X-X sont parcourues par des courants provoquant des flux magnétiques qui s'additionnent pour créer des boucles magnétiques 5 dans la pièce polaire 21, l'entrefer E1, la partie rotorique 1, l'entrefer E2, la pièce polaire 22, le noyau magnétique 250, la pièce polaire 23 et le noyau magnétique 240. En revanche, les flux induits par les bobines 24 et 25 et traversant la pièce polaire 23 et l'entrefer E3 se neutralisent si ces flux sont égaux, c'est-à-dire en pratique, si le rotor est correctement centré selon l'axe X-X à l'instant considéré, si les courants qui traversent les bobines sont de même valeur absolue.

Ainsi, selon les sens de flux induits représentés à la figure 5, les flux induits s'opposent au flux de l'aimant 26 dans l'entrefer E1 et s'additionnent au flux de l'aimant 27 dans l'entrefer E2.

Les flux induits créent donc une force qui tend à réduire l'entrefer E2 et par conséquent à déplacer la partie rotorique 1 vers le bas de la figure 5. Il est ainsi possible de centrer de manière active le palier magnétique selon l'axe longitudinal Z-Z.

Les circuits de centrage selon l'axe Z-Z et selon les axes X-X et Y-Y sont magnétiquement découplés.

Selon un mode de réalisation simplifié non représenté, le palier magnétique comporte l'axe longitudinal de centrage et un seul axe transversal de centrage. Le palier n'est alors muni de bobines 24, 25 que sur un seul axe transversal, disposées en vis à vis symétriquement par rapport à l'axe Z-Z.

Selon d'autres variantes, le palier comporte plus de deux axes transversaux de centrage, par exemple trois ou quatre, ce qui permet un centrage transversal plus précis. Chacun des axes transversaux de centrage est associé à des bobines 24, 25.

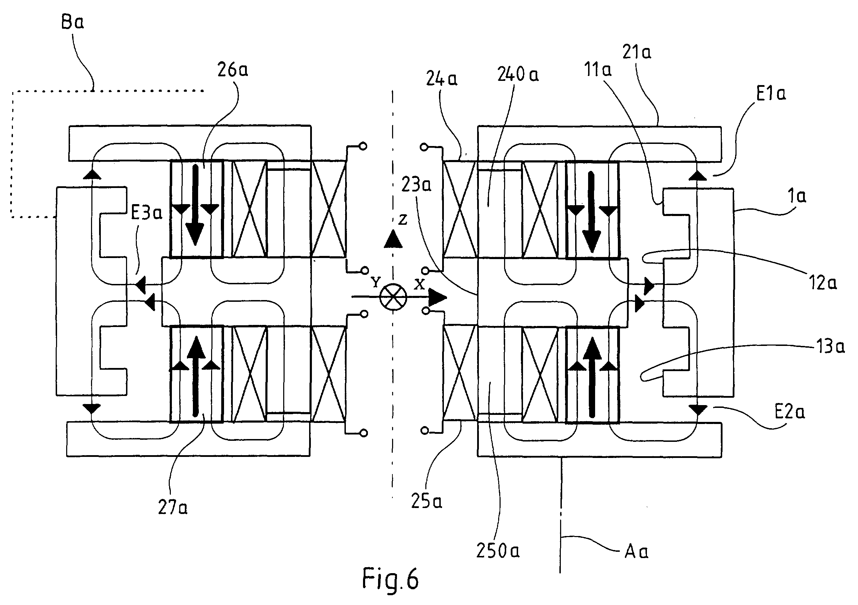

En référence à la **figure 6,** un deuxième mode de réalisation de palier magnétique selon l'invention se différencie du mode précédent en ce que la partie rotorique est à l'extérieur de la partie statorique. Les mêmes références numériques, suivies de la lettre «a» sont affectées aux éléments de ce palier magnétique qui sont analogues aux éléments du premier palier décrit en référence aux figures 1 à 5.

Le second mode de réalisation de palier magnétique selon l'invention comporte une partie rotorique la sous la forme d'un cylindre creux d'axe longitudinal de rotation Z-Z. Sur la face interne de la partie rotorique 1a sont ménagées trois collerettes 11a, 12a et 13a.

La partie rotorique 1a, solidaire d'un corps Aa, est entourée selon l'axe Z-Z par deux pièces polaires 21a et 22a de la partie statorique 2a, solidaire d'un corps Ba, de manière à former deux entrefers E1a et E2a. Les pièces polaires 21a et 22a sont deux plaques ferromagnétiques, identiques, parallèles et disposées transversalement à l'axe Z-Z, qui comportent quatre branches, ici reliées entre elles le long de leur bord radialement externe. Le diamètre extérieur des plaques 21a et 22a est égal à celui de la partie rotorique 1a.

La partie statorique 2a comporte également une pièce polaire médiane 23a centrée sur l'axe Z-Z, à mi-distance des pièces polaires 21a et 22a. La pièce polaire 23a a une forme correspondant à celle des pièces polaires 21a et 22a, et a quatre branches reliées entre elles le long de leur bord radialement externe. Des bobines 24a et 25a entourant des noyaux magnétiques 240a et 250a sont insérées entre les pièces polaires 21a, 22a et 23a.

Deux aimants permanents 26a et 27a sont disposés de part et d'autre, selon l'axe Z-Z, de la pièce polaire médiane 23a. Les aimants 26a et 27a ont des aimantations longitudinales opposées, par exemple convergentes. Les aimants 26a et 27a sont cylindriques et centrés sur l'axe Z-Z.

La pièce polaire médiane 23a définit un entrefer E3a avec la collerette 12a de la partie rotorique 1a.

Le fonctionnement de ce palier magnétique est analogue à celui précédemment décrit.

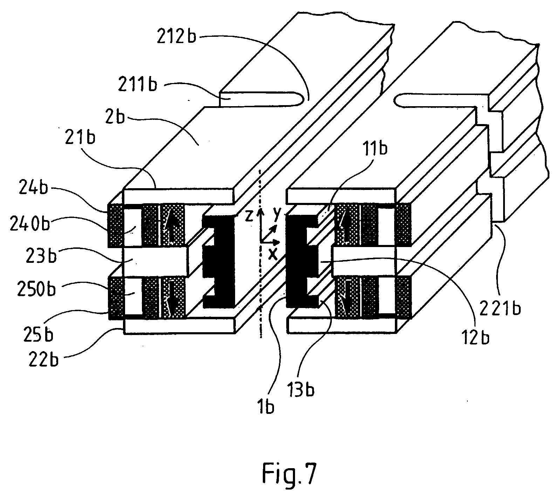

En référence à la **figure 7,** un troisième mode de réalisation de palier magnétique selon l'invention est un palier magnétique à mouvement linéaire selon la direction Y-Y.

Ce palier comporte une barre 1b mobile selon l'axe Y-Y et une partie fixe 2b. Un axe transversal X-X et un axe de référence Z-Z, perpendiculaires entre eux et avec l'axe Y-Y, constituent deux axes de centrage de la partie mobile par rapport à la partie fixe.

La barre 1b est réalisée en un matériau ferromagnétique et constitue une pièce polaire pourvue de trois collerettes 11b, 12b et 13b.

La partie fixe 2b comporte deux parties symétriques par rapport au plan contenant les axes Y-Y et Z-Z. Chacune de ces parties comporte des plaques ferromagnétiques identiques 21b et 22b qui sont des pièces polaires, dites principales, perpendiculaires à l'axe Z-Z. Les pièces polaires 21b sont alignées selon une direction parallèle à l'axe Y-Y, et comportent des entailles 211b perpendiculaires à l'axe Y-Y qui séparent chaque pièce polaire 21b en portions alignées selon l'axe Y-Y et reliées deux à deux par des ponts 212b. Les ponts 212b limitent les courants de Foucault en cas de translation à grande vitesse de la partie mobile. En variante, les portions de pièces polaires sont complètement séparées.

De même, les pièces polaires 22b sont alignées selon une direction parallèle à l'axe Y-Y, et comportent des entailles 221b perpendiculaires à l'axe Y-Y qui séparent chaque pièce polaire 22b en portions alignées selon l'axe Y-Y. Les entailles 221b sont analogues à celles des pièces polaires 21b.

Une pièce polaire médiane 23b, sous la forme d'une barre ferromagnétique, est disposée à mi-distance entre les plaques 21b et 22b.

Des bobines identiques 24b et 25b, respectivement enroulées autour de noyaux magnétiques 240b et 250b sont disposées entre les pièces polaires 21b et 22b, et la pièce polaire médiane 23b.

Des aimants permanents 26b et 27b, sous la forme de barres, sont disposés entre les pièces polaires 21b et 22b, et la pièce polaire médiane 23b. Les aimants 26b et 27b ont des aimantations parallèles à l'axe de référence Z-Z et de sens opposé, par exemple divergent.

Le palier magnétique comporte trois entrefers E1 b, E2b et E3b.

Le fonctionnement de ce palier magnétique est analogue à celui du premier mode de réalisation et permet un centrage actif selon les axes X-X et Z-Z.

Bien entendu, la présente invention n'est nullement limitée aux modes de réalisation décrits et représentés, mais englobe, bien au contraire, toute variante à la portée de l'homme du métier.

En particulier, les parties statorique et rotorique peuvent être échangées.

## Revendications

1. Palier magnétique pour le centrage d'un corps mobile (A) sans contact par rapport à un corps fixe (B) selon un axe de référence (Z-Z), ayant au moins un axe transversal (X-X, Y-Y) perpendiculaire à l'axe de référence, et comportant
- deux circuits magnétiques disposés de part et d'autre de l'axe de référence, le long de l'axe transversal, et formés chacun de première et seconde parties ferromagnétiques destinées à être portées respectivement par lesdits corps et séparées par deux entrefers principaux (E1, E2) décalés parallèlement à l'axe de référence, la première partie ferromagnétique comportant deux pièces polaires principales (21, 22) perpendiculaires à l'axe de référence,
- des moyens (26, 27) à aimantation permanente parallèle à l'axe de référence (Z-Z), disposés entre les pièces polaires principales de chaque circuit magnétique et générant des flux magnétiques au travers des entrefers principaux (E1, E2),
- des moyens à bobinage (24, 25) adaptés à générer dans au moins l'un des circuits magnétiques un flux magnétique commandable dans les entrefers principaux (E1, E2),
ce palier magnétique étant caractérisé en ce que, pour l'un au moins des circuits magnétiques,
- les entrefers principaux (E1, E2) sont d'épaisseur variable parallèlement à l'axe de référence (Z-Z),
- une pièce ferromagnétique médiane (23) perpendiculaire à l'axe de référence, solidaire de la première partie ferromagnétique, est disposée entre les pièces polaires principales (21, 22) de cette première partie ferromagnétique et est séparée de la seconde partie ferromagnétique (1) par un entrefer médian (E3) d'épaisseur variable parallèlement à l'axe transversal,
- les moyens à aimantation permanente comportent deux aimants à sens opposés d'aimantation enserrés entre les pièces polaires principales (21, 22) et la pièce ferromagnétique médiane (23), et
- les moyens à bobinage (24, 25) comportent des bobines indépendantes disposées de part et d'autre de la pièce ferromagnétique médiane (23) parallèlement à l'axe de référence (Z-Z), grâce à quoi, selon le sens des courants qui traversent ces bobines, celles-ci sont adaptées à générer dans la pièce ferromagnétique médiane (23) un flux magnétique commandable traversant l'entrefer médian (E3), de sorte que les bobines assurent un centrage transversal, et un flux magnétique commandable traversant les entrefers principaux (E1, E2), grâce à quoi les bobines assurent un centrage parallèlement audit axe de référence.

2. Palier magnétique selon la revendication 1, caractérisé en ce que les premières parties ferromagnétiques sont destinées à être portées par le corps fixe (B).

3. Palier magnétique selon l'une quelconque des revendications 1 ou 2, caractérisé en ce que la seconde partie ferromagnétique (1) est disposée entre les premières parties ferromagnétiques.

4. Palier magnétique selon l'une quelconque des revendications 1 ou 2, caractérisé en ce que la seconde partie ferromagnétique (1) est disposée autour des premières parties ferromagnétiques.

5. Palier magnétique selon l'une quelconque des revendications 1 à 4, caractérisé en ce que l'axe de référence est un axe de rotation du corps mobile par rapport au corps fixe, en ce que la seconde partie ferromagnétique (1) est une couronne magnétique, et en ce que la pièce ferromagnétique médiane (23) est globalement annulaire dans la région de l'entrefer médian (E3).

6. Palier magnétique selon la revendication 5, caractérisé en ce que deux autres circuits magnétiques de même structure sont disposés de part et d'autre de l'axe de rotation (Z-Z) le long d'un second axe transversal de centrage perpendiculaire à l'axe de rotation, comportant deux autres premières parties ferromagnétiques coopérant avec la seconde partie ferromagnétique (1) au travers de deux autres entrefers principaux (E1, E2) d'épaisseur variable parallèlement à l'axe de rotation, des bobines (24, 25) étant adaptées à générer un flux magnétique commandable dans ces deux autres circuits magnétiques, d'autres aimants permanents à sens opposés d'aimantation étant disposés dans ces deux autres premières parties ferromagnétiques de part et d'autre de la pièce ferromagnétique médiane (23), ladite pièce ferromagnétique médiane étant séparée de la seconde partie ferromagnétique par deux autres entrefers médians (E3), et les bobines étant adaptées à générer un flux magnétique commandable dans lesdits deux autres entrefers médians.

7. Palier magnétique selon l'une quelconque des revendications 1 à 4, caractérisé en ce que la seconde partie ferromagnétique (1) est une barre magnétique mobile selon un axe perpendiculaire (Y-Y) perpendiculaire à l'axe de référence (Z-Z).

8. Palier magnétique selon l'une quelconque des revendications 1 à 7, caractérisé en ce que les pièces polaires principales sont parallèles et centrées sur l'axe de rotation du palier magnétique, et comportent des branches qui enserrent les bobines (24, 25).

9. Palier magnétique selon l'une quelconque des revendications 1 à 6, caractérisé en ce que les moyens à aimantation permanente comportent deux aimants permanents (25, 26 ; 25a, 26a ; 25b, 26b) en forme de couronne cylindrique centré sur l'axe de rotation (Z-Z).

10. Palier magnétique selon l'une quelconque des revendications 1 à 9, caractérisé en ce que la seconde partie magnétique comporte une collerette (12, 12a, 12b) sensiblement en vis à vis de la pièce ferromagnétique médiane.

11. Palier magnétique selon l'une quelconque des revendications 1 à 10, caractérisé en ce que la seconde partie magnétique comporte des collerettes (11, 13 ; 11a, 13a ; 11b, 13b) s'étendant sensiblement en vis à vis desdites pièces polaires principales.

12. Palier magnétique selon l'une quelconque des revendications 1 à 11, caractérisé en ce que les bobines indépendantes (24, 25) sont disposées autour de noyaux (240, 250) parallèles à l'axe de référence et situés entre la pièce polaire médiane et les pièces polaires principales (21, 22).
